# EUROPEAN PATENT APPLICATION

(11) **EP 3 907 752 A1**
(43) Date of publication of application: **10.11.2021**
(21) Application number: 20749156.4
(22) Date of filing: 30.01.2020
(51) Int. Cl.: H01H 9/16, H01H 13/02, H01H 13/52, H01H 13/70

(54) **PUSH-BUTTON SWITCH AND INPUT DEVICE**

(30) Priority: 31.01.2019 JP 2019016129
(71) Applicant: NKK Switches Co., Ltd., Kawasaki-shi, Kanagawa 213-8553 (JP)
(72) Inventor: HARADA, Sho, Kawasaki-shi, Kanagawa 213-8553 (JP); MUSHIAKE, Kotaro, Kawasaki-shi, Kanagawa 213-8553 (JP); OKANO, Yotaro, Kawasaki-shi, Kanagawa 213-8553 (JP); AOYAMA, Masahiro, Kawasaki-shi, Kanagawa 213-8553 (JP); URA, Hiroki, Kawasaki-shi, Kanagawa 213-8553 (JP); SUZUKI, Akiko, Kawasaki-shi, Kanagawa 213-8553 (JP); TANAKA, Yoshihiro, Kawasaki-shi, Kanagawa 213-8553 (JP); BETSUDA, Nobuhiko, Kawasaki-shi, Kanagawa 213-8553 (JP)
(74) Representative: Herzog, Markus
(86) International application number: PCT/JP2020/003555
(87) International publication number: WO 2020/158901

(57) **Abstract**

The present invention addresses the problem of providing a push-button switch which is capable of clearly displaying an image output from a display and which allows a person performing a dedepressing operation to have a distinct operational feel. Among the elements constituting the push-button switch 1, a button 11 is a transparent or substantially transparent button which is disposed over a display D and which receives a dedepressing operation. Lenses 15a, 15b, 15c, and 15d are disposed between the button 11 and the display D, and cause an image V1 output from the display D to be projected with a focal point at a diffusing plate 12 in a top surface of the button 11 in a standby position before a dedepressing operation is performed. A holding member 14 incorporates the lenses 15a, 15b, 15c, and 15d in such a way that the position and orientation of each of the lenses 15a, 15b, 15c, and 15d are fixed with respect to the display D. Thus, the problem is solved.

## Description

### TECHNICAL FIELD

The present invention relates to a pushbutton switch and an input device having the plurality of pushbutton switches on an external display.

### BACKGROUND ART

Conventionally, there has been a human-machine interface (input device), in which a plurality of pushbutton switches having an image display function are arranged on a display. Such a human-machine interface has begun to be employed in the field of broadcast audio equipment. The human-machine interface as such must ensure sharpness of an image displayed on pushbutton switches. As one of the techniques to ensure sharpness of an image displayed on pushbutton switches, a known technique shortens the distance between an image display unit of a pushbutton switch and a display (for example, see Japanese Unexamined Patent Application, Publication No. 2015-84313). However, by shortening the distance between the image display unit of the pushbutton switch and the display, the stroke of a depressing operation on the pushbutton switch will be shortened as well. As a result, a person who performs a depressing operation on the pushbutton switch cannot obtain a clear operational feeling; in line with this, another technique mounts lenses inside the switch, thereby projecting an image from the display onto the pushbutton switch (for example, see Japanese Unexamined Patent Application, Publication No. H06-44857).

Patent Document 1: Japanese Unexamined Patent Application, Publication No. 2015-84313
Patent Document 2: Japanese Unexamined Patent Application, Publication No. H06-44857

### DISCLOSURE OF THE INVENTION

### Problems to be Solved by the Invention

However, although these techniques can ensure a satisfactory stroke, the lens configuration as described above cannot correct aberrations, resulting in a distorted image, and cannot perform clear and accurate display. As described above, there has been a technical problem in achieving both the sharpness of an image displayed on an image display unit of a pushbutton switch and the operational feeling felt by a person who performs a depressing operation.

The present invention has been made against such a background, and an object of the present invention is to provide a pushbutton switch that can clearly display an image outputted from a display, in which a person who performs a depressing operation can obtain a clear operational feeling. Another object of the present invention is to provide a human-machine interface, in which a plurality of pushbutton switches having such technical features are arranged on an external display.

### Means for Solving the Problems

In order to achieve the above-mentioned object, the pushbutton switch according to the present invention includes: a transparent or substantially transparent button that receives a depressing operation and is arranged above an external display;
a plurality of lenses arranged between the button and the external display, the plurality of lenses projecting an image outputted from the external display as focused on a top panel of the button in a standby position before performing a depressing operation; and
a retaining member that incorporates the plurality of lenses such that a position and orientation of each of the plurality of lenses are fixed relative to the external display.

According to the present invention, since the plurality of lenses are arranged between the button and the external display, even if the button and the external display are sufficiently spaced apart to ensure an operational stroke, the plurality of lenses project a video outputted from the external display as focused on the top panel of the button. As a result, a video outputted from the external display can be clearly projected onto the top panel of the button while ensuring a sufficient operational stroke.

The plurality of lenses are preferably composed of a first lens and a second lens each having a convex surface and arranged to face each other, and preferably project the image as focused on the top panel of the button in a standby position.

In this case, since the two lenses each having a convex surface are arranged between the button and the external display, the two lenses project a video outputted from the external display as focused on the top panel of the button. As a result, the video outputted from the external display can be clearly projected onto the top panel of the button.

The first lens and the second lens are preferably incorporated and fixed as spaced apart in a direction of the depressing operation.

In this case, since the first lens and the second lens are incorporated and fixed as spaced apart in the direction of the depressing operation, the position for fixing the first lens and the second lens can be arbitrarily adjusted. As a result, the video outputted from the external display can be clearly projected onto the top panel of the button.

The distance from the standby position to the position of the button after performing a depressing operation is preferably 1.8 mm or more.

In this case, since a sufficient space is ensured between the button and the lenses before performing a depressing operation, a depressing operation with a long stroke can be performed. As a result, a person who performs a depressing operation can obtain a clear operational feeling.

In order to achieve the above-mentioned object, the input device according to the present invention includes:
the pushbutton switch of any one of the foregoing; and
the external display arranged below the plurality of pushbutton switches.

According to the present invention, an input device can be manufactured, in which a plurality of pushbutton switches having the above-mentioned technical features are arranged. In other words, a human-machine interface can be provided, which can clearly project an image outputted from an external display, in which a person who performs a depressing operation can obtain a clear operational feeling.

### Effects of the Invention

According to the present invention, a pushbutton switch can be provided, which can clearly display an image outputted from a display, in which a person who performs a depressing operation can obtain a clear operational feeling. Further, a human-machine interface can be provided, in which a plurality of pushbutton switches having such technical features are arranged on an external display.

### BRIEF DESCRIPTION OF THE DRAWINGS

FIG. 1A is a perspective appearance view of a pushbutton switch according to a first embodiment of the present invention;
FIG. 1B is a cross-sectional view of the pushbutton switch according to the first embodiment of the present invention; FIG. 2A is a plan view of the pushbutton switch according to the first embodiment of the present invention;
FIG. 2B is a side view of the pushbutton switch according to the first embodiment of the present invention;
FIG. 2C is a front view of the pushbutton switch according to the first embodiment of the present invention;
FIG. 2D is a bottom view of the pushbutton switch according to the first embodiment of the present invention;
FIG. 3A is a cross-sectional view illustrating a state before performing a depressing operation on the pushbutton switch according to the first embodiment of the present invention; FIG. 3B is a cross-sectional view illustrating a state after performing a depressing operation on the pushbutton switch according to the first embodiment of the present invention;

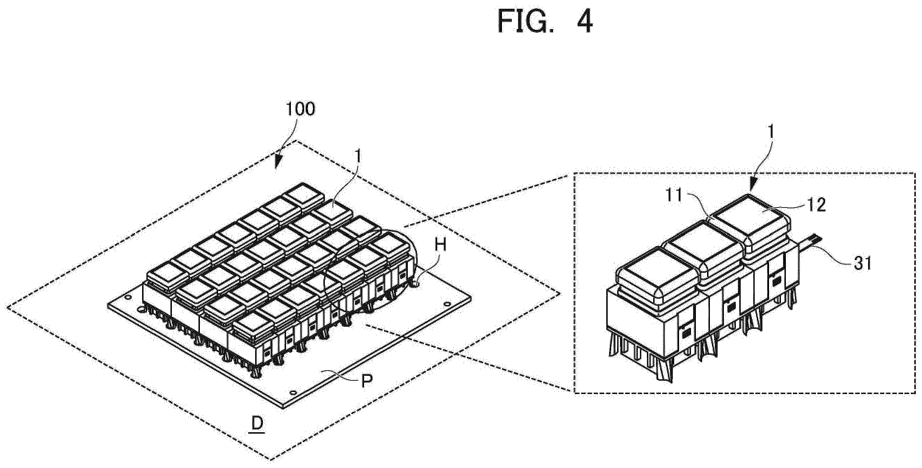

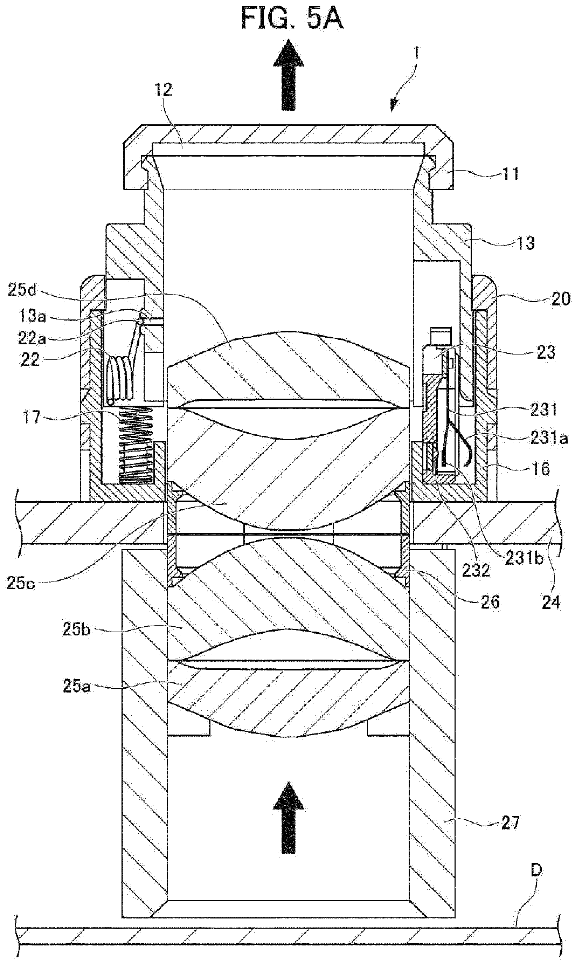

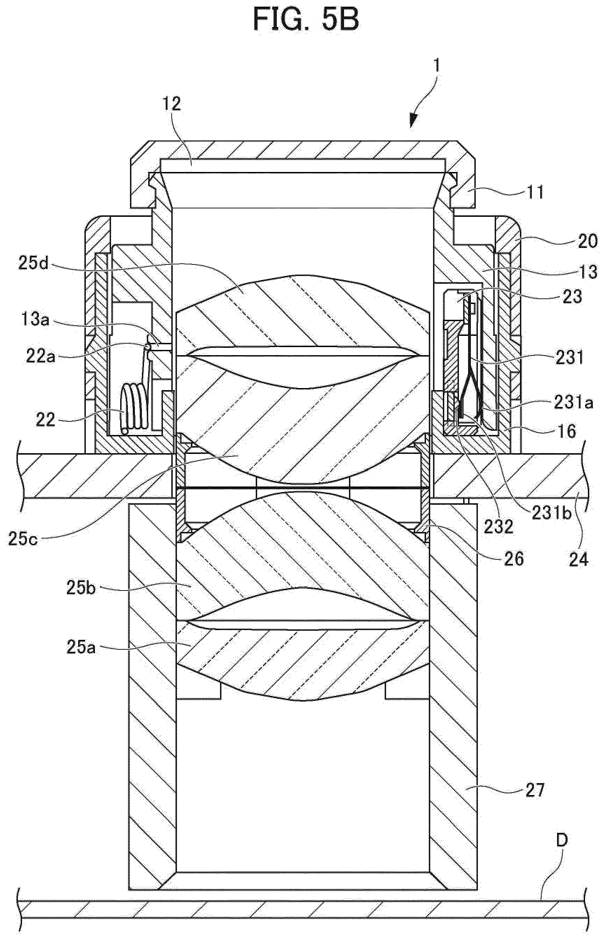

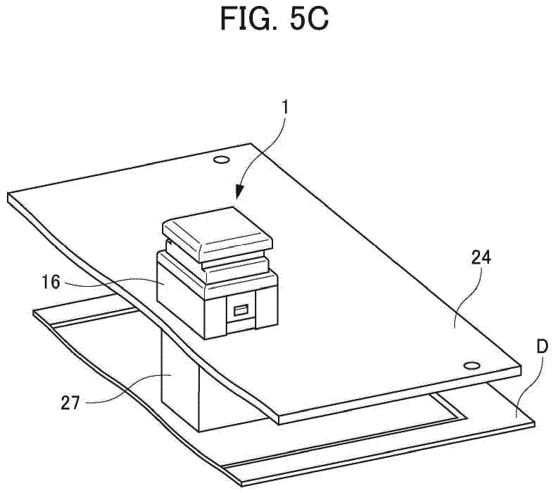

FIG. 4 is a perspective appearance view of an input device according to the first embodiment of the present invention; FIG. 5A is a cross-sectional view illustrating a state before performing a depressing operation on a pushbutton switch according to a second embodiment of the present invention; FIG. 5B is a cross-sectional view illustrating a state after performing a depressing operation on the pushbutton switch according to the second embodiment of the present invention; FIG. 5C is a perspective appearance view of the pushbutton switch according to the second embodiment of the present invention;
FIG. 6A is a cross-sectional view illustrating a state before performing a depressing operation on a pushbutton switch according to a third embodiment of the present invention;
FIG. 6B is a cross-sectional view illustrating a state after performing a depressing operation on a pushbutton switch according to a third embodiment of the present invention; and FIG. 6C is a perspective appearance view of the pushbutton switch according to the third embodiment of the present invention.

### PREFERRED MODE FOR CARRYING OUT THE INVENTION

Referring to the drawings, a pushbutton switch 1 according to some embodiments of the present invention will be described. Note that the present invention is not limited to the following embodiments.

### [First Embodiment]

### [Basic Configuration]

The pushbutton switch 1 according to a first embodiment is a pushbutton switch that can display a video outputted from a display D, via a transparent or substantially transparent mounting panel P arranged above the display D, on a top panel of a button 11 in a standby position before performing a depressing operation. The video outputted from the display D includes a still image and a moving image. The pushbutton switch 1 can display either a still image or a moving image outputted from the display D, on the top panel of the button 11 in a standby position before performing a depressing operation.

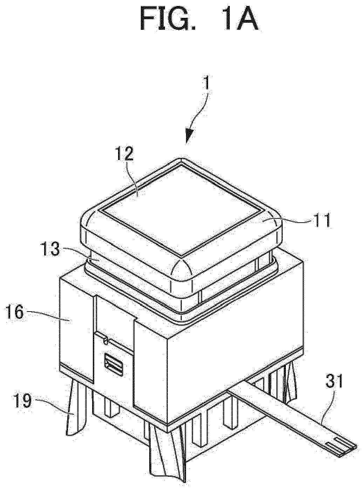

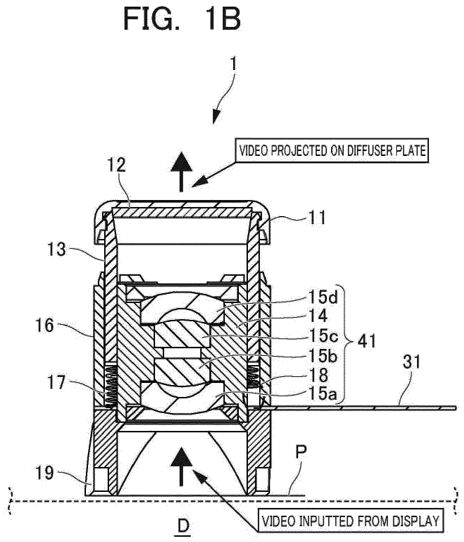

As illustrated in FIGS. 1A and 1B, the pushbutton switch 1 as such is configured to include a button 11, a diffuser plate 12, a plunger 13, a retaining member 14, four lenses 15a, 15b, 15c and 15d, a housing 16, a coil spring 17, a contact point 18, and a fixing plate 19. As illustrated in FIG. 4, the pushbutton switches 1 can be fixed, side by side, onto the mounting panel P by using a membrane sheet 31 having a plurality of contacts (not illustrated).

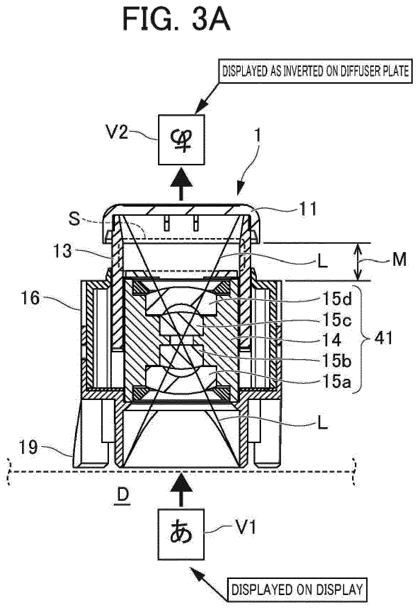

As illustrated in FIG. 1B, with the pushbutton switch 1 in the state before performing a depressing operation on the button 11, a video outputted from the display D is inputted in the direction of the arrow and displayed on the diffuser plate 12. Specifically, as illustrated in FIG. 3A, a light ray group L of a video V1 displayed on the display D is inputted in the direction of the arrow, refracted and condensed as passing through the four lenses 15a, 15b, 15c and 15d, and formed as an inverted image focused on the diffuser plate 12. As a result, the video V1 displayed on the display D is rotated 180 degrees as a video V2 clearly projected onto the diffuser plate 12.

### [Specific Configuration]

Hereinafter, each constituent element of the pushbutton switch 1 according to the first embodiment will be described in detail.

### (Button)

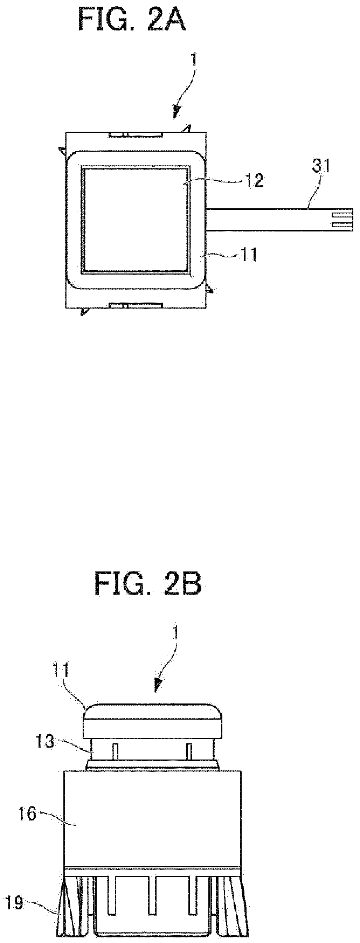

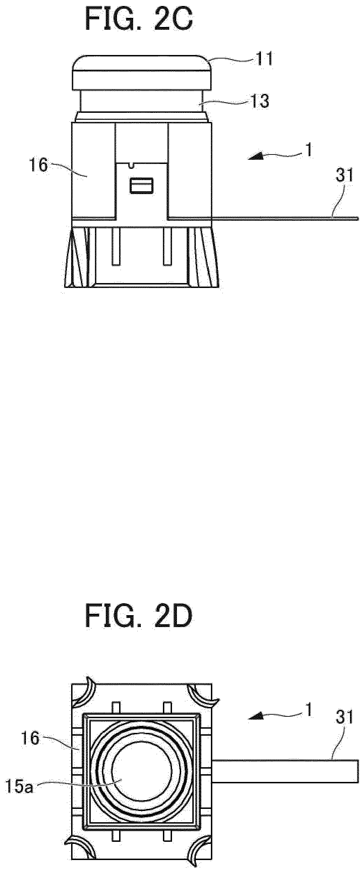

The button 11 is a button that receives a depressing operation on the pushbutton switch 1, and is arranged at the top of the pushbutton switch 1, as illustrated in FIGS. 1A to 4. When a depressing operation on the button 11 is performed, the button 11, the diffuser plate 12, and the plunger 13 move in the direction of the depressing operation, in conjunction with the depressing operation. Along with this, the coil spring 17 contracts in the direction of the depressing operation. Then, at the contact point 18, the blocked state is switched to the energized state, or the energized state is switched to the blocked state. Although the shape of the button 11 is not limited in particular, in the present embodiment, the shape is a substantially square pole shape having four rounded corners and a flat portion on the top panel, as illustrated in FIGS. 1A to 4.

### (Diffuser plate)

The diffuser plate 12 is a transparent or substantially transparent diffuser plate that functions as a screen for projecting light of a video; and specifically, the diffuser plate 12 diffuses the light of the video incident thereon and emits the light. The diffuser plate 12 is arranged on the top panel of the button 11. Therefore, a video projected onto the diffuser plate 12 can be easily visually recognized by a person who intends to depress the pushbutton switch 1. Although the shape of the diffuser plate 12 is not limited in particular, in the present embodiment, the shape is a square or substantially square shape as illustrated in FIGS. 1A, 1B, 2A to 2D and 4.

### (Plunger)

The plunger 13 is arranged as coupled to the bottom of the button 11. When a depressing operation on the button 11 is performed, the plunger 13 slides downward in conjunction with the depressing operation. An upper end of the coil spring 17 is connected to the bottom of the plunger 13. Therefore, when the plunger 13 slides downward, the coil spring 17 contracts in the direction of the depressing operation, in conjunction therewith. Although the shape of plunger 13 is not limited in particular, in the present embodiment, the shape is a square pole shape having a cavity inside, as illustrated in FIGS. 1A to 4. The retaining member 14 and the lenses 15a, 15b, 15c and 15d to be described later are arranged in the cavity inside the plunger 13.

### (Retaining member)

The retaining member 14 is a member arranged in the cavity inside the plunger 13, and retains the lenses 15a, 15b, 15c and 15d. Specifically, the retaining member 14 functions as a lens unit 41 that incorporates the lenses 15a, 15b, 15c and 15d, such that a position and orientation of each of the lenses 15a, 15b, 15c and 15d are fixed relative to the display D. In the present embodiment, the retaining member 14 functions as the lens unit 41 that incorporates four lenses (lenses 15a, 15b, 15c and 15d); however, the number of lenses is not limited in particular, as long as a plurality of lenses can be incorporated. For example, three lenses may be incorporated, or two lenses may be incorporated by including a first lens that integrates the lenses 15a and 15b, and a second lens that integrates the lenses 15c and 15d. The retaining member 14 may also be integrated with the housing 16.

### (Lens)

The lenses 15a, 15b, 15c and 15d are lenses incorporated into the retaining member 14, and refract and condense the light ray group L of the video V1 outputted from the display D as an image formed on the image diffuser plate 12, as illustrated in FIG. 3A. Both the lenses 15b and 15c are composed of a planoconvex lens having a convex portion and a flat portion. The lens 15b is a planoconvex lens having a convex surface on the display D side and a flat surface on the button 11 side, and the lens 15c is a planoconvex lens having a convex surface on the button 11 side and a flat surface on the display D side. The retaining member 14 retains and arranges the lenses 15b and 15c such that the flat surfaces face each other. Here, in the present embodiment, the lenses 15c and 15d are retained and arranged such that the flat surfaces are spaced apart from each other by a predetermined gap; however, without limitation thereto, the lenses 15c and 15d may be retained as completely in contact with each other. In the present embodiment, the lens 15a is composed of a concave meniscus lens having a convex surface on the display D side, and the lens 15d is composed of a concave meniscus lens having a convex surface on the button 11 side.

### (Housing)

The housing 16 is a box-shaped housing having a storage space inside, which can store a multitude of members that compose the pushbutton switch 1. Specifically, the housing 16 houses the plunger 13, the retaining member 14, the lenses 15a, 15b, 15c and 15d, the coil spring 17, and the contact point 18. Although the shape of the housing 16 is not limited in particular, in the present embodiment, the shape is a square pole shape having a cavity inside, as illustrated in FIGS. 1A to 4.

### (Coil spring)

The coil spring 17 is a linear coil spring having one end connected to the bottom of the plunger 13 and the other end connected to the membrane sheet 31 or the contact point 18. The coil spring 17 contracts in the direction of a depressing operation on the button 11, in conjunction with an operation of the plunger 13 that slides downward by the depressing operation. When the depressing operation on the button 11 is released, the coil spring 17 elastically deforms and upwardly pushes back the plunger 13 connected to the one end. As a result, the button 11, the diffuser plate 12 and the plunger 13, which were positioned below by the depressing operation, return to the position before performing the depressing operation. The aspect of the coil spring 17 is not limited in particular, and may at least include a function of returning the members to the position before performing a depressing operation, when the depressing operation on the buttons 11 is released.

### (Contact point)

The contact point 18 is a contact mechanism that switches between a blocked state and an energized state in conjunction with a depressing operation on the button 11. The contact point 18 maintains the blocked state before performing a depressing operation on the button 11, and switches to the energized state upon performing a depressing operation. Upon performing a further depressing operation, the contact point 18 switches from the energized state to the blocked state. More specifically, the contact point 18 switches between the blocked state and the energized state each time a depressing operation on the pushbutton switch 1 is performed. An upper end of the contact point 18 is connected to the end of the coil spring 17.

### (Fixing plate)

The fixing plate 19 is a member for fixing the pushbutton switch 1 to the mounting panel P and is arranged at four corners of the lower portion of the housing 16. Specifically, as illustrated in FIG. 4, the fixing plate 19 of the pushbutton switch 1 is fixed as inserted into a hole H provided in the mounting panel P.

With the configuration as described above, the pushbutton switch 1 can clearly display a video outputted from the display D, which is positioned at a sufficient distance from the top panel (diffuser plate 12), on the top panel (diffuser plate 12) of the button 11 in the standby position before performing a depressing operation. Further, since an operational stroke is ensured by providing a sufficient space between the button 11 and the lens 15d in a standby position before performing a depressing operation, a person who performs a depressing operation can obtain a clear operational feeling.

### [Operation]

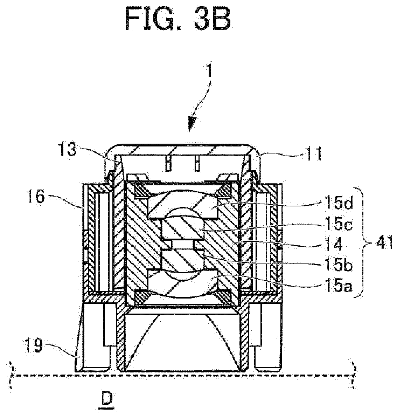

Next, referring to FIGS. 3A and 3B, an operation of the pushbutton switch 1 when performing a depressing operation on the pushbutton switch 1 according to the first embodiment will be described.

FIG. 3A illustrates a state of the pushbutton switch 1 before performing a depressing operation on the button 11. FIG. 3B illustrates a state of the pushbutton switch 1 after performing a depressing operation on the button 11. As illustrated in FIG. 3A, a sufficient space S is ensured between the button 11 and the lens 15d of the pushbutton switch 1 before performing a depressing operation on the button 11. When a depressing operation on the button 11 is performed in the state illustrated in FIG. 3A, the plunger 13 begins to slide downward, and the lower surface of the button 11 is locked by the housing 16. As a result, the pushbutton switch 1 enters the state illustrated in FIG. 3B, and the plunger 13 cannot slide further and will stop. At this timing, the contact point 18 is switched to switch the blocked state to the energized state, or the energized state to the blocked state.

As illustrated in FIGS. 3A and 3B, the pushbutton switch 1 can receive a depressing operation by a distance of a stroke M. Here, the distance of the stroke M is not limited in particular; however, it is desirable to ensure a distance of at least 1.8 mm or more, in order to allow a person who performs a depressing operation to obtain a clear operational feeling. Since the distance of the stroke M of the pushbutton switch 1 of the present embodiment is 4 mm or more, a person who performs a depressing operation can obtain a clear operational feeling.

### [Input device]

Next, referring to FIG. 4, a specific example of an input device 100 will be described, in which a plurality of pushbutton switches 1 according to the first embodiment are arranged on a display D.

As illustrated in FIG. 4, the pushbutton switches 1 according to the present embodiment can be fixed, side by side, onto the mounting panel P by using the membrane sheet 31 described above. Specifically, three pushbutton switches 1 are coupled to form a single unit using a single membrane sheet 31, and sequentially arranged and fixed onto the mounting panel P. Here, a specific method of fixing the pushbutton switches 1 to the mounting panel P is not limited in particular; however, in the present embodiment, as described above, the fixing plate 19 of the pushbutton switch 1 is inserted and fixed into the hole H provided in the mounting panel P. As described above, the plurality of pushbutton switches 1 fixed on the mounting panel P are arranged and fixed on the display D, thereby completing the input device 100. A video outputted from the display D is clearly displayed on the plurality of pushbutton switches 1 orderly arranged on the input device 100.

### [Second Embodiment]

### [Basic Configuration]

A pushbutton switch 1 according to a second embodiment is a pushbutton switch that can display a video outputted from a display D, on a top panel of a button 11 in a standby position before performing a depressing operation. The video outputted from the display D includes a still image and a moving image. The pushbutton switch 1 can display either a still image or a moving image outputted from the display D, on the top panel of the button 11 in a standby position before performing a depressing operation.

As illustrated in FIGS. 5A and 5B, the pushbutton switch 1 as such is configured to include the button 11, a diffuser plate 12, a plunger 13, a housing 16, a coil spring 17, a cover 20, a torsion coil spring 22, a switch element 23, a printed circuit board 24, four lenses 25a, 25b, 25c and 25d, a lens fixation frame 26, and a lens hood 27. The switch element 23 has a movable armature 231 and a fixed armature 232. As illustrated in FIG. 5C, the pushbutton switch 1 is fixed such that the housing 16 and the lens hood 27 sandwich the printed circuit board 24 from above and below. The pushbutton switch 1 is arranged together with the printed circuit board 24 on the display D.

With the pushbutton switch 1 as illustrated in FIG. 5A, in the state before performing a depressing operation on the button 11, a video outputted from the display D is inputted in the direction of the arrow and displayed on the diffuser plate 12. Specifically, similar to the first embodiment, a light ray group of the video displayed on the display D is inputted in the direction of the arrow, refracted and condensed as passing through the four lenses 25a, 25b, 25c and 25d, and formed as an inverted image focused on the diffuser plate 12. As a result, the video displayed on the display D is rotated 180 degrees as a video clearly projected onto the diffuser plate 12.

### [Specific Configuration]

Hereinafter, each constituent element of the pushbutton switch 1 according to the second embodiment will be described in detail.

Since the configuration of the button 11, the diffuser plate 12, the plunger 13, and the housing 16 illustrated in FIG. 5A and 5B is the same as that of the first embodiment, description thereof will be omitted.

### (Coil spring)

The coil spring 17 is a linear coil spring having one end connected to the bottom of the plunger 13 and the other end connected to the housing 16. The coil spring 17 contracts in the direction of a depressing operation on the button 11, in conjunction with an operation of the plunger 13 that slides downward by the depressing operation. When the depressing operation on the button 11 is released, the coil spring 17 elastically deforms and upwardly pushes back the plunger 13 connected to the one end. As a result, the button 11, the diffuser plate 12, and the plunger 13, which were positioned below by the depressing operation, return to the position before performing the depressing operation. The aspect of the coil spring 17 is not limited in particular, and may at least include a function of returning the members to the position before performing a depressing operation, when the depressing operation on the buttons 11 is released.

### (Cover)

The cover 20 is a cover arranged on the outer side of the plunger 13 and the housings 16.

### (Torsion coil spring)

The torsion coil spring 22 is a member that generates an audible click by colliding with a portion of the plunger 13 when a depressing operation on the button 11 is performed or released. One end 22a of the torsion coil spring 22 is rotatably supported by a shaft support 13a provided on the side surface of the plunger 13. The other end (not illustrated) of the torsion coil spring 22 is rotatably and slidably engaged with a long groove (not illustrated) provided vertically on the side surface of the plunger 13. When the button 11 is depressed, and the plunger 13 slides downward, the end of the torsion coil spring 22 engaged with the long groove (not illustrated) of the plunger 13 slides downward in the long groove and collides with a lower end of the long groove. As a result, a collision sound (audible click) is generated. When the plunger 13 slides upward upon releasing the button 11, the end of the torsion coil spring 22 engaged with the long groove of plunger 13 slides upward in the long groove and collides with an upper end of the long groove. As a result, a collision sound (audible click) is generated.

### (Switch element)

The switch element 23 is a contact mechanism that switches between the blocked state and the energized state in conjunction with a depressing operation on the button 11. The switch element 23 has a movable armature 231 and a fixed armature 232. When the button 11 is depressed, and the plunger 13 slides downward, the lower end of plunger 13 downwardly pushes a movable portion 231a of the movable armature 231 from above. Along with this, a contact area 231b of the movable armature 231 moves toward and contacts the fixed armature 232 side. As a result, the switch element 23 switches from the blocked state to the energized state.

The printed circuit board 24 is a board for fixing the pushbutton switch 1 on the display D.

### (Lens)

The lenses 25a, 25b, 25c, and 25d are lenses that are fixed by the lens fixation frame 26 and thereby incorporated into the pushbutton switch 1. Both the lenses 25a and 25d are composed of a planoconvex lens having a convex portion and a flat portion. The lens 25a is a planoconvex lens having a convex surface on the display D side and a flat surface on the button 11 side. The lens 25d is a planoconvex lens having a convex surface on the button 11 side and a flat surface on the display D side. Both the lenses 25b and 25c are composed of a concave meniscus lens having a convex portion and a concave portion. The lens 25b is a concave meniscus lens having a concave surface on the display D side and a convex surface on the button 11 side. The lens 25c is a concave meniscus lens having a convex surface on the button 11 side and a convex surface on the display D side. The lenses 25b and 25c are arranged and fixed by the lens fixation frame 26 such that the convex surfaces thereof face each other. Here, in the present embodiment, the lenses are adjacently arranged and fixed as spaced apart by a predetermined gap, between the lens 25a and the lens 25b, between the lens 25b and the lens 25c, and between the lens 25c and the lens 25d. However, the present invention is not limited thereto; and for example, the lenses may be fixed as completely in contact with each other.

### (Lens hood)

The lens hood 27 is a housing arranged to surround the lenses 25a and 25b.

With the configuration as described above, the pushbutton switch 1 according to the second embodiment can clearly display a video outputted from the display D positioned at a sufficient distance from the top panel (diffuser plate 12), on the top panel (diffuser plate 12) of the button 11 in a standby position before performing a depressing operation. Further, since an operational stroke is ensured by providing a sufficient space between the button 11 and the lens 25d in a standby position before performing a depressing operation, a person who performs a depressing operation can obtain a clear operational feeling. Furthermore, an audible click (collision sound) generated by an operation of the torsion coil spring 22 allows a person who performs a depressing operation to obtain a further clearer operational feeling.

### [Operation]

Next, referring to FIGS. 5A and 5B, an operation of the pushbutton switch 1 when performing a depressing operation on the pushbutton switch 1 according to the second embodiment will be described.

FIG. 5A illustrates a state of the pushbutton switch 1 before performing a depressing operation on the button 11. FIG. 5B illustrates a state of the pushbutton switch 1 after performing a depressing operation on the button 11. When a depressing operation on the button 11 is performed in the state illustrated in FIG. 5A, the plunger 13 begins to slide downward, and the lower surface of the button 11 is locked by the housing 16. As a result, the pushbutton switch 1 enters the state illustrated in FIG. 5B, and the plunger 13 cannot slide further and will stop. At this timing, the switch element 23 is switched, and an audible click (collision sound) is generated by an operation of the torsion coil spring 22. As a result, a person who performs a depressing operation can obtain a clear operational feeling.

### [Third Embodiment]

### [Basic Configuration]

A pushbutton switch 1 according to a third embodiment is a pushbutton switch that can display a video outputted from a display D, on a top panel of a button 11 in a standby position before performing a depressing operation. The video outputted from the display D includes a still image and a moving image. The pushbutton switch 1 can display either a still image or a moving image outputted from the display D, on the top panel of the button 11 in a standby position before performing a depressing operation.

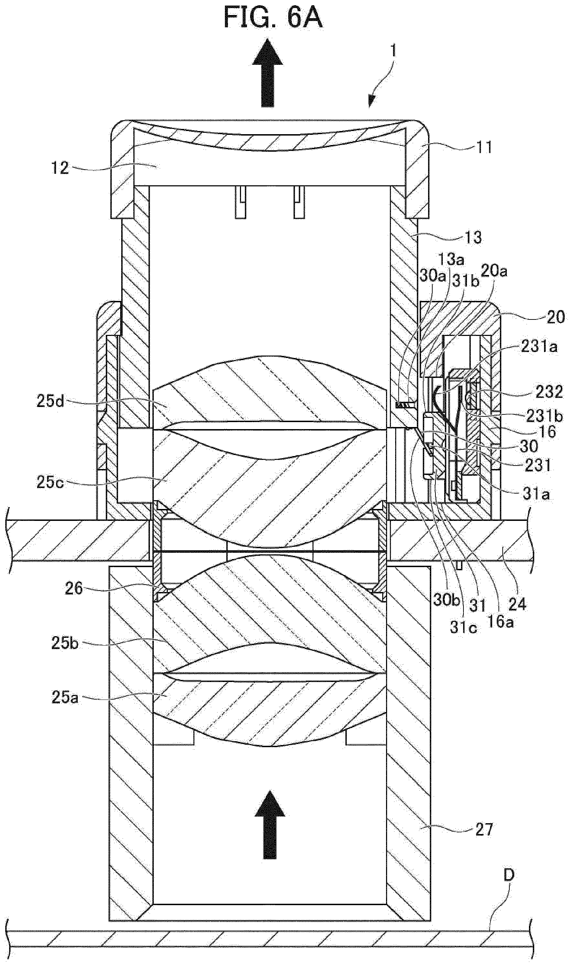

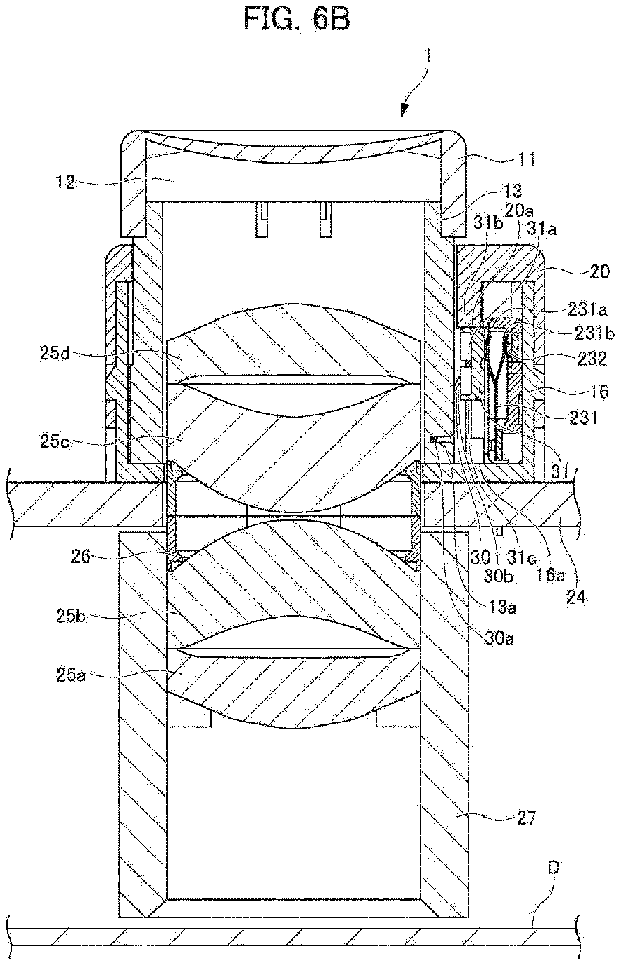

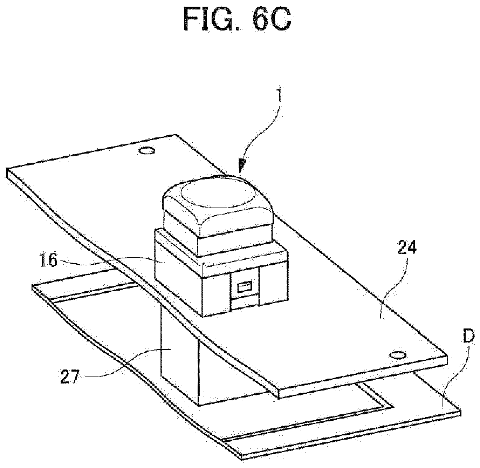

As illustrated in FIGS. 6A and 6B, the pushbutton switch 1 as such is configured to include the button 11, a diffuser plate 12, a plunger 13, a housing 16, a cover 20, a torsion coil spring 30, a click plate 31, a printed circuit board 24, four lenses 25a, 25b, 25c and 25d, a lens fixation frame 26, and a lens hood 27. A switch element composed of a movable armature 231 and a fixed armature 232 is provided. As illustrated in FIG. 6C, the pushbutton switch 1 is fixed to the printed circuit board 24 such that the housing 16 and the lens hood 27 sandwich the printed circuit board 24. The pushbutton switch 1 is arranged together with the printed circuit board 24 on the display D.

With the pushbutton switch 1 as illustrated in FIG. 6A, in the state before performing a depressing operation on the buttons 11, a video outputted from the display D is inputted in the direction of the arrow and displayed on the diffuser plate 12. Specifically, similar to the first and second embodiments, a light ray group of the video displayed on the display D is inputted in the direction of the arrow, refracted and condensed as passing through the four lenses 25a, 25b, 25c and 25d, and formed as an inverted image focused on the diffuser plate 12. As a result, the video displayed on the display D is rotated 180 degrees as a video clearly projected onto the diffuser plate 12.

### [Specific Configuration]

Hereinafter, each constituent element of the pushbutton switch 1 according to the third embodiment will be described in detail.

Since the configuration of the diffuser plate 12, the plunger 13 and the housing 16 illustrated in FIGS. 6A and 6B is the same as that of the first and second embodiments, description thereof will be omitted. Since the configuration of the printed circuit board 24, the lenses 25a to 25d and the lens hood 27 is the same as that of the second embodiment, description thereof will be omitted.

The button 11 is a button that receives a depressing operation on the pushbutton switch 1, and arranged at the top of the pushbutton switch 1 as illustrated in FIGS. 6A and 6B. The button 11 has a shape having a recess on the top panel. This achieves an effect of facilitating a depressing operation on the pushbutton switch 1. Since the top panel has a shape having a recess, the imaging surface needs to be adjusted; therefore, the rear surface (video entrance surface) of the button 11 has an aspherical shape.

The cover 20 is a cover for covering the upper portion of the housing 16. A collision piece 20a for generating a sound (audible click) by colliding with an upper end 31b of the click plate 31 is provided inside a ceiling portion of the cover 20. The shape of the cover 20 is not limited in particular; however, in the present embodiment, the cover 20 has a square shape having a cavity in the central portion as illustrated in FIGS. 6A to 6C.

### (Torsion coil spring)

The torsion coil spring 30 is a torsion coil spring composed of a first shaft 30a and a second shaft 30b arranged to face each other and two coils formed between the shafts. The first shaft 30a is pivotally supported by a shaft support 13a provided in a portion of the plunger 13. As a result, when the plunger 13 slides downward, the torsion coil spring 30 rotates around the first shaft 30a. The second shaft 30b is pivotally supported by a shaft support 31a provided in a portion of the click plate 31. When the pushbutton switch 1 is in the blocked state, the shaft support 13a and the shaft support 31a have a positional relationship such that the shaft support 13a is positioned above the shaft support 31a, as illustrated in FIG. 6A. Here, when a depressing operation on the button 11 begins, the plunger 13 begins to slide downward in conjunction with the depressing operation. Then, the torsion coil spring 30 stores elastic energy while the first shaft 30a is bending and approaching the second shaft 30b. In the state in which the torsion coil spring 30 has bent and the first shaft 30a and the second shaft 30b are closest to each other, when the plunger 13 slides further downward, the torsion coil spring 30 swings backward and releases the stored elastic energy while the second shaft 30b is stretching and separating from the first shaft 30a. The released energy is transmitted to the click plate 31 via the shaft support 31a. As a result, the click plate 31 slides upward so as to jump up. Then, the upper end 31b of the click plate 31 having slid upward collides with the collision piece 20a of the cover 20 and generates a collision sound (audible click).

When the plunger 13 begins to slide upward in conjunction with a returning operation of the button 11, the torsion coil spring 30 stores elastic energy while the first shaft 30a is bending and approaching the second shaft 30b again. In the state in which the torsion coil spring 30 has bent and the first shaft 30a and the second shaft 30b are closest to each other again, when the plunger 13 slides further upward, the torsion coil spring 30 swings backward and releases the stored elastic energy while the second shaft 30b is stretching and separating from the first shaft 30a. The released elastic energy is transmitted to the click plate 31 via the shaft support 31a. As a result, the click plate 31 slides downward. Then, the lower end 31c of the click plate 31 having slid downward collides with a bottom 16a of an inner wall of the housing 16 and generates a collision sound (audible click).

### (Click plate)

The click plate 31 is a member for generating an audible click when performing a depressing operation on the button 11; the click plate 31 slides using elastic energy released simultaneously with the torsion coil spring 30 elastically deforming, and collides with the collision piece 20a to generate a collision sound (audible click). Specifically, the click plate 31 has the shaft support 31a that pivotally supports the second shaft 30b of the torsion coil spring 30. The click plate 31 is arranged near the bottom of the inner wall of the housing 16 when the pushbutton switch 1 is in the blocked state. When a depressing operation on the button 11 begins, and the plunger 13 slides downward, the torsion coil spring 30 stores elastic energy while the first shaft 30a is bending and approaching the second shaft 30b; and when the plunger 13 further slides in the state in which the first shaft 30a and the second shaft 30b are closest to each other, the torsion coil spring 30 swings backward while the second shaft 30b is stretching and separating from the first shaft 30a, and the torsion coil spring 30 causes the click plate 31 to slide upward while releasing the stored elastic energy. When the torsion coil spring 30 swings backward, an operator of the pushbutton switch 1 recognizes the swinging backward of the torsion coil spring 30 as a so-called click feeling on the fingertip. Then, the upper end 31b of the click plate 31 having slid upward collides with the collision piece 20a of the cover 20 and generates a collision sound (audible click).

### (Movable armature and fixed armature)

The movable armature 231 and the fixed armature 232 configure a switch element that switches between the blocked state and the energized state in conjunction with a depressing operation on the button 11. When the button 11 is depressed and the plunger 13 slides downward, and the click plate 31 consequently slides upward, the upper end 31b of the click plate 31 pushes up a movable portion 231a of the movable armature 231 from below, and a contact area 231b of the movable armature 231 moves toward and contacts the fixed armature 232 side in conjunction therewith. As a result, the blocked state is switched to the energized state.

With the configuration as described above, the pushbutton switch 1 according to the third embodiment can clearly display a video outputted from the display D positioned at a sufficient distance from the top panel (diffuser plate 12), on the top panel (diffuser plate 12) of the button 11 in a standby position before performing a depressing operation. Further, since an operational stroke is ensured by providing a sufficient space between the button 11 and the lens 25d in a standby position before performing a depressing operation, a person who performs a depressing operation can obtain a clear operational feeling. Furthermore, an audible click (collision sound) generated by an operation of the torsion coil spring 30 allows a person who performs a depressing operation to obtain a further clearer operational feeling.

### [Operation]

Next, referring to FIGS. 6A and 6B, an operation of the pushbutton switch 1 when performing a depressing operation on the pushbutton switch 1 according to the third embodiment will be described.

FIG. 6A illustrates a state of the pushbutton switch 1 before performing a depressing operation on the button 11. FIG. 6B illustrates a state of the pushbutton switch 1 after performing a depressing operation on the button 11. When a depressing operation on the button 11 is performed in the state illustrated in FIG. 6A, the plunger 13 begins to slide downward, and the lower surface of the button 11 is locked by the housing 16. As a result, the pushbutton switch 1 enters the state illustrated in FIG. 6B, and the plunger 13 cannot slide further and will stop. At this timing, the contact mechanism is switched, and an audible click (collision sound) is generated by an operation of the torsion coil spring 30. As a result, a person who performs a depressing operation can obtain a clear operational feeling.

Some embodiments of the present invention have been described above; however, the present invention is not limited to the above-described embodiments, and modifications, improvements, etc. within the scope that can achieve the object of the present invention are included in the present invention. Various modifications may be made without departing from the spirit of the present invention.

For example, in the first embodiment described above, the shape of the lenses 15b and 15c employs a planoconvex lens having a convex portion and a flat portion, and the shape of the lenses 15a and 15d employs a concave meniscus lens having a convex portion and a concave portion, which are however merely an example. A lens of an aspect that can achieve the object of the present invention may be used, and for example, a biconvex lens, a convex meniscus lens, a planoconcave lens, a biconcave lens, etc. may be employed. For example, in the second and third embodiments described above, the shape of the lenses 25b and 25c employs a concave meniscus lens having a convex portion and a concave portion, and the shape of the lenses 25a and 25d employs a planoconvex lens having a convex portion and a flat portion, which are however merely an example. A lens of an aspect that can achieve the object of the present invention may be used, and for example, a biconvex lens, a convex meniscus lens, a planoconcave lens, a biconcave lens, etc. may be employed.

In summary, the pushbutton switch to which the present invention is applied may be configured as follows and can take various embodiments. Specifically, the pushbutton switch to which the present invention is applied (e.g., pushbutton switch 1 of FIGS. 3A and 3B) includes:
a transparent or substantially transparent button (e.g., button 11 and diffuser plate 12 of FIGS. 3A and 3B) that receives a depressing operation and is arranged above an external display (e.g., display D of FIGS. 3A and 3B);
a plurality of lenses (e.g., lenses 15a, 15b, 15c and 15d of FIGS. 3A and 3B) arranged between the button and the external display, the plurality of lenses projecting an image (e.g., video V1 of FIG. 3A) outputted from the external display as focused on the top panel (e.g., diffuser plate 12 of FIGS. 3A and 3B) of the button in a standby position before performing a depressing operation; and
a retaining member (e.g., retaining member 14 of FIGS. 3A and 3B, or lens fixation frame 26 of FIGS. 5A and 5B) that incorporates the plurality of lenses such that a position and orientation of each of the plurality of lenses are fixed relative to the external display.

Thus, for example, in the first embodiment, since the lenses 15a, 15b, 15c and 15d are arranged between the button 11 and the display D, the light ray group L of the video V1 outputted from the display D is refracted and condensed as an image formed on the diffuser plate 12. As a result, the video V1 outputted from the display D can be clearly projected as a video V2 onto the transparent or substantially transparent diffuser plate 12.

The plurality of lenses are composed of the first lens (e.g., lens 15a of FIGS. 3A and 3B) and the second lens (e.g., lens 15b of FIGS. 3A and 3B) each having a convex surface and arranged to face each other, and can project the image as focused on the top panel of the button in the standby position.

As a result, for example, in the first embodiment, since the two lenses 15a and 15b each having a convex surface are arranged between the button 11 and the display D, the light ray group L of the video V1 outputted from the display D is refracted and condensed as an image formed on the transparent or substantially transparent diffuser plate 12. Therefore, the video V1 outputted from the display D can be clearly projected as a video V2 onto the transparent or substantially transparent diffuser plate 12.

The retaining member can incorporate the first lens and the second lens to be fixed as spaced apart from each other in the direction of the depressing operation.

As a result, since the first lens and the second lens are incorporated and fixed as spaced apart from each other in the direction of the depressing operation, the positions for fixing the first lens and the second lens can be arbitrarily adjusted. Therefore, the video outputted from the external display can be clearly projected onto the top panel of the button.

A distance from the standby position to the position of the button after performing a depressing operation (e.g., a distance of the stroke M of FIG. 3A) can be 1.8 mm or more.

Therefore, for example, in the first embodiment, since a sufficient space is ensured between the button 11 and the lens 15b in the state before performing a depressing operation, a depressing operation with a long stroke M can be performed. As a result, a person who performs a depressing operation can obtain a clear operational feeling.

The pushbutton switch may further include: a torsion coil spring (e.g., torsion coil spring 30 of FIGS. 6A and 6B) that accumulates or releases elastic energy when a plunger (e.g., plunger 13 of FIG. 6A and 6B) slides in conjunction with a depressing operation on the button;
a click plate (e.g., click plate 31 of FIGS. 6A and 6B) that slides using the elastic energy released simultaneously with the torsion coil spring elastically deforming, and collides with a collision piece (e.g., collision piece 20a of FIGS. 6A and 6B) to generate a collision sound;
a movable armature (e.g., movable armature 231 of FIGS. 6A and 6B) including a movable-side contact (e.g., contact area 231b of FIGS. 6A and 6B) and being movable when depressed by the click plate sliding; and
a fixed armature (e.g., fixed armature 232 of FIGS. 6A and 6B) including a fixed-side contact, the fixed armature locking the movable-side contact at the fixed-side contact simultaneously or substantially simultaneously with the click plate colliding with the collision piece.

As a result, the timing of generating a collision sound with the click plate can be synchronized with the timing of switching the pushbutton switch. A person who performs a depressing operation can obtain a clear operational feeling (so-called click feeling).

The pushbutton switch further includes: a plunger (e.g., plunger 13 of FIGS. 5A and 5B) including a shaft support (e.g., shaft support 13a of FIGS. 5A and 5B) and a long groove, the plunger sliding in conjunction with a depressing operation on the button; and
a torsion coil spring (e.g., torsion coil spring 22 of FIGS. 5A and 5B) including a first end (e.g., end 22a of FIGS. 5A and 5B) and a second end, the first end being rotatably supported by the shaft support of the plunger, and the second end being rotatably and slidably engaged in the long groove of the plunger, in which
the first end moves along with the plunger sliding, and stores elastic energy in the torsion coil spring, and the second end slides in the long groove by using the elastic energy released simultaneously with the torsion coil spring elastically deforming, and collides with the lower end of the long groove to allow for generating a collision sound.

As a result, the torsion coil spring generates a collision sound along with a depressing operation; therefore, a person who performs a depressing operation can obtain a clear operational feeling (so-called click feeling).

The button (e.g., button 11 of FIGS. 6A and 6B) may have a recessed shape on the top panel side, and an aspherical shape on the external display side.

Thus, since the top panel side of the button has a recessed shape, the depressing operation can be facilitated. Since the aspherical shape on the external display side of the button adjusts the imaging surface, a suitable video can be outputted.

The input device (e.g., input device 100 of FIG. 4) to which the present invention is applied includes:
the pushbutton switch described above; and
the external display arranged below the plurality of pushbutton switches.

As a result, the input device 100 can be manufactured, in which the plurality of pushbutton switches having the above-mentioned technical features are arranged. Specifically, a human-machine interface can be provided, which can clearly project the video V1 outputted from the display D, in which a person who performs a depressing operation can obtain a clear operational feeling.

### EXPLANATION OF REFERENCE NUMERALS

1: pushbutton switch; 11: button; 12: diffuser plate; 13: plunger; 14: retaining member; 15a ,15b, 15c, 15d: lens; 16: housing; 17: coil spring; 18: contact point; 19: fixing plate; 20: cover; 22: torsion coil spring; 23: switch element; 24: printed circuit board, 25a, 25b, 25c, 25d: lens; 26: lens fixation frame; 27: lens hood; 30: torsion coil spring; 31: click plate; 231: movable armature; 231a: movable portion; 231b: contact area; 232: fixed armature; 41: lens unit, 100: input device; p: mounting panel; d: display; v1: video outputted from display; v2: video projected onto diffuser plate; s: space; m: stroke; l: light ray group; h: hole

## Claims

1. A pushbutton switch, comprising:
a transparent or substantially transparent button that receives a depressing operation and is arranged above an external display;
a plurality of lenses arranged between the button and the external display, the plurality of lenses projecting an image outputted from the external display as focused on a top panel of the button in a standby position before performing a depressing operation; and
a retaining member that incorporates the plurality of lenses such that a position and orientation of each of the plurality of lenses are fixed relative to the external display.

2. The pushbutton switch according to claim 1, wherein
the plurality of lenses are configured to include a first lens and a second lens each having a convex surface and arranged to face each other, and project the image as focused on the top panel of the button in a standby position.

3. The pushbutton switch according to claim 2, wherein
the retaining member incorporates the first lens and the second lens to be fixed as spaced apart from each other in a direction of the depressing operation.

4. The pushbutton switch according to any one of claims 1 to 3, wherein
a distance from the standby position to a position of the button after performing the depressing operation is 1.8 mm or more.

5. The pushbutton switch according to any one of claims 1 to 4, further comprising:
a torsion coil spring that accumulates or releases elastic energy when a plunger slides in conjunction with a depressing operation on the button;
a click plate that slides using the elastic energy released simultaneously with the torsion coil spring elastically deforming, and collides with a collision piece to generate a collision sound;
a movable armature including a movable-side contact and being movable when depressed by the click plate sliding; and a fixed armature including a fixed-side contact, the fixed armature locking the movable-side contact point at the fixed-side contact point simultaneously or substantially simultaneously with the click plate colliding with the collision piece.

6. The pushbutton switch according to any one of claims 1 to 4, further comprising:
a plunger including a shaft support and a long groove, the plunger sliding in conjunction with a depressing operation on the button; and
a torsion coil spring including a first end and a second end, the first end being rotatably supported by the shaft support of the plunger, and the second end being rotatably and slidably engaged in the long groove of the plunger, wherein
the first end moves along with the plunger sliding, and stores elastic energy in the torsion coil spring, and
the second end slides in the long groove by using the elastic energy released simultaneously with the torsion coil spring elastically deforming, and collides with the lower end of the long groove to generate a collision sound.

7. The pushbutton switch according to any one of claims 1 to 6, wherein
the button has a recessed shape on a side of the top panel, and an aspherical shape on a side of the external display.

8. An input device, comprising:
the pushbutton switch according to any one of claims 1 to 7; and
an external display arranged below a plurality of the pushbutton switch.
